# EUROPEAN PATENT SPECIFICATION

(11) **EP 3 814 599 B1**
(45) Date of publication and mention of the grant of the patent: **15.02.2023**
(21) Application number: 19732627.5
(22) Date of filing: 20.06.2019
(51) Int. Cl.: E06B 3/663

(54) **POST COATING ANNEAL OF PILLAR FOR VACUUM INSULATED GLAZING (VIG) UNIT**
GLÜHEN NACH DEM BESCHICHTEN EINER SÄULE FÜR VAKUUMISOLIERTE VERGLASUNGEN
RECUIT POST-REVÊTEMENT DE PILIER POUR UNITÉ DE VITRAGE ISOLANT SOUS VIDE (VIG)

(30) Priority: 27.06.2018 DK PA201870443
(43) Date of publication of application: 05.05.2021
(73) Proprietor: VKR Holding A/S, 2970 Hørsholm (DK)
(72) Inventor: KRISKO, Annette Johncock, 2970 Hørsholm (DK); JOHNSEN, Simon, 2970 Hørsholm (DK)
(74) Representative: Zacco Denmark A/S
(86) International application number: PCT/EP2019/066350
(87) International publication number: WO 2020/002126

(56) References cited:
- WO-A1-96/12862
- US-A- 5 891 536

## Description

### BACKGROUND

Vacuum insulated glazing (VIG) units comprise a sealed cavity between two glass panes which have been evacuated to a reduced pressure such as 0.001 millibars or less. This low pressure sealed cavity can in turn result in a large pressure asserted on each glass pane towards the sealed cavity. Pillars, also known as spacers, can be used in VIG units to maintain the sealed cavity and the distance between the glass panes. The pillars can be subject to compressive forces because the sealed cavity is under a vacuum, and thus the pillars are designed with sufficient compressive strength. The pillars also can be shaped with a diameter that is greater than the height to avoid overturning in response to a friction force.

Additionally, temperature differentials across the glass panes can significantly impact the structure of the VIG unit, in some cases, cause the unit to fail. The temperature differential can arise because the temperature of the exterior pane can approach the outside air temperature, whereas the interior pane remains at a relatively constant temperature that is consistent with the inside air temperature. The resulting movement of the exterior pane relative to the interior pane is known as "differential pane movement." During differential pane movement caused by changes in outside air temperature, the high static friction force, exacerbated by the doming of the glass over each pillar, can resist slippage to an extent that the VIG unit can bow into (or out of) the building. Slippage of the panes over the flat faces of the pillars (when the static friction resistance to movement is eventually overcome) can also cause significant noise and undesirable scratches.

US5891536 discloses vacuum glazings comprises two sheets of glass, hermetically sealed around the edge, with a thermally insulating internal vacuum, and an array of support pillars placed between the glass sheets. The pillars may consist of a core made of a material of higher compressive strength, with at least one end covered by a layer of softer material. Alternatively, an array of support pillars placed between the glass sheets may be used, wherein the array includes a small number of fused solder glass pillars located over the surface of the glazing, between pillars of higher compressive strength.

However, there is still a need for pillars that have a low coefficient of friction to reduce the deleterious effects that can be the result of constrained differential pane movement.

### BRIEF DESCRIPTION

Provided is a method of manufacturing a vacuum insulated glazing (VIG) unit comprising depositing a coating material on at least a portion of a pillar core under conditions effective to provide a deposited coating material; annealing the deposited coating material, thereby providing a coated pillar; disposing at least one of the coated pillar between first and second substantially parallel glass panes; disposing a peripheral seal material around a periphery of the first and the second glass panes to form a pre-sealed VIG unit; and heating the pre-sealed VIG unit under reduced pressure to form the peripheral seal and a sealed cavity between the first and second glass panes.

Also provided is a vacuum insulated glazing (VIG) unit comprising first and second substantially parallel glass panes; a peripheral seal attached around a periphery of the first and the second glass panes, thereby forming a sealed cavity between the first and the second glass panes; and at least one coated pillar disposed in the sealed cavity between the first and the second glass panes, wherein the coated pillar is derived from a coating material deposited on at least a portion of a pillar core under conditions effective to provide a deposited coating material, wherein the deposited coating material is annealed at a reduced pressure to form a coating layer on the at least a portion of the pillar core, thereby providing the coated pillar.

The above described and other features are exemplified by the following figures and detailed description.

### BRIEF DESCRIPTION OF THE DRAWINGS

The following figures are exemplary embodiments wherein the like elements are numbered alike.
FIG. 1 shows a series of scanning electron microscopy (SEM) images of a coated pillar in a VIG unit according to one or more embodiments.
FIG. 2 shows a series of SEM images of a deposited coating material (top) and a coated pillar (bottom) according to one or more embodiments.

### DETAILED DESCRIPTION

Exemplary embodiments will now be described more fully hereinafter with reference to the accompanying drawings that are schematic illustrations of idealized embodiments, wherein like reference numerals refer to like elements throughout the specification. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims. Some of the parts which are not associated with the description may not be provided in order to specifically describe exemplary embodiments of the present disclosure.

The terminology used herein is for the purpose of describing particular embodiments only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

In the drawings, thicknesses of a plurality of layers and areas are illustrated in an enlarged manner for clarity and ease of description thereof. When a layer, area, element, or plate is referred to as being "on" another layer, area, element, or plate, it may be directly on the other layer, area, element, or plate, or intervening layers, areas, elements, or plates may be present therebetween. Conversely, when a layer, area, element, or plate is referred to as being "directly on" another layer, area, element, or plate, there are no intervening layers, areas, elements, or plates therebetween. Further when a layer, area, element, or plate is referred to as being "below" another layer, area, element, or plate, it may be directly below the other layer, area, element, or plate, or intervening layers, areas, elements, or plates may be present therebetween. Conversely, when a layer, area, element, or plate is referred to as being "directly below" another layer, area, element, or plate, there are no intervening layers, areas, elements, or plates therebetween.

The spatially relative terms "lower" or "bottom" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or operation, in addition to the orientation depicted in the drawings. For example, in the case where a device illustrated in the drawings is turned over, elements described as being on the "lower" side of other elements, or "below" or "beneath" another element would then be oriented on "upper" sides of the other elements, or "above" another element. Accordingly, the illustrative term "below" or "beneath" may include both the "lower" and "upper" orientation positions, depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below, and thus the spatially relative terms may be interpreted differently depending on the orientations described. Additionally, it will be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

The term "static", when referring to friction or contact, means that the two surfaces in contact do not experience relative motion.

The term "dynamic", when referring to friction or contact, means that the two surfaces in contact experience relative motion.

"Differential pane movement" refers to the relative pane movement between two adjacent glass panes that occurs when the temperature of one glass pane changes relative to the temperature of the other glass pane. It may also refer to the relative glass pane movement that occurs under mechanical influence or other influence (e.g., impact during handling or use).

It is desirable for the glass panes in the VIG unit to have the ability to move independently relative to one another to accommodate thermal gradients across the VIG unit. Additionally, in certain applications, the VIG unit can be subject to wind loads, or mechanical flexing from being pushed or hit on one side or the other. The matrix of pillars can also be damaged from excessive mechanical flexing of the glass panels. To limit, minimize, or reduce the detrimental effects caused by thermal gradients and/or mechanical flexing of the glass panes, it is desirable to provide the pillars with a degree of lubricity so that the glass panes may move independently of each other when flexed.

Exterior windows that include a VIG unit also can be subjected to any number of environmental hazards, which can include impact on the exterior surface of the outside-facing glass pane by flying objects. This type of impact can generate a Hertz stress on the glass pane and may cause damage. The resulting damage to the glass pane is referred to as a Hertz fracture (Hertz crack or cone crack), which is a conical fracture face that forms on the impact surface of the glass pane. The inclusion of pillars can increase the amount or number of cone cracks that form after impact or under stress. Thus, a further objective of the present disclosure is to provide pillars that minimize or reduce the number or amount of observed cone cracking.

Provided herein is a method of manufacturing a vacuum insulated glazing (VIG) unit that includes coated pillars. The coated pillars are configured to minimize or reduce the detrimental effects that can result from differential pane movement. In particular, the coated pillars include a coating layer having a low coefficient of friction (e.g., a high lubricity). Pillars that lack the coating layer and/or that have a higher coefficient of friction can hinder the relative movement between the surfaces of the pillar and their respective glass panes, thus reducing relative movement between the glass panes. When this relative movement is reduced, additional forces can be exerted on the glass panes that can lead to failure of the VIG unit.

The method of manufacturing the VIG unit includes depositing a coating material on at least a portion of a pillar core under conditions effective to provide a deposited coating material. Any suitable method of deposition can be used to provide the deposited coating material. In some embodiments, the deposition can be sputter deposition, cathodic arc deposition, evaporative deposition, pulsed laser deposition, pulsed electron deposition, electron beam physical vapor deposition, or a combination thereof. In one or more embodiments, the coating material is deposited by sputtering, wherein the sputtering is DC sputtering, RF sputtering, pulsed DC sputtering, mid frequency AC sputtering, high power impulse magnetron sputtering, or a combination thereof. In one or more embodiments, the coating material is deposited using DC sputtering.

The deposition of the coating material can be performed in a deposition compartment that includes a deposition system. The deposition compartment (e.g., deposition chamber) and the deposition system can be configured according to the deposition method, and is not particularly limited. As an illustrative example, the deposition compartment for DC sputtering can be a vacuum deposition chamber that includes a substrate platform, for example a drum, to position the pillar core for deposition, a DC power source, a sputtering target, a sputtering gas source, and a vacuum source. For the exemplary DC sputtering, parameters such as deposition rate, gas pressure, target geometry, and sputtering distance can be varied as suitable. The sputtering target or targets can be selected based on the desired coating material, as provided in detail below. The sputtering gas can be an inert gas like argon and can form a plasma, which may further contain a reactive gas, for example elemental chalcogen, optionally linked to a vaporizer. The material to be sputtered (i.e., the target) can be connected to the negative terminal of the DC power source and can serve as a cathode. The positive terminal of the DC power source can be connected to a separate anode structure or to the vacuum chamber itself, depending on the application. Deposition of the reaction product between the atoms originating from the target and atoms originating from the reactive gas can occur on the substrate (e.g., the pillar core).

In some embodiments, a surface of the pillar core is heated or at an elevated temperature during the deposition of the coating material. In one or more embodiments, the surface of the pillar core is at a temperature of 200-600°C during the depositing of the coating material. In one or more embodiments, the surface of the pillar core is at a temperature of 250-550°C, 300-500°C, 300-450°C, 350-500°C, 325-475 °C, or 350-450°C. The surface of the pillar core can be heated by any suitable method. For example, the surface of the pillar core can be heated in a deposition chamber through radiative heating. In one or more embodiments, the pillar core is held on a substrate platform and heated by an induction heater in thermal communication with the substrate platform such that the surface of the pillar core reaches the specified temperature. As used herein, the term "surface of the pillar core" means any surface portion of the pillar core onto which the coating material is being deposited. In some embodiments, both the pillar core and the surfaces of the pillar core are at the specified temperature. In one or more embodiments, at least one surface area of the pillar core is at the specified temperature and the remainder of the pillar core is at another temperature.

In one or more embodiments, the deposition chamber can include a sputtering gas. As detailed further above, sputtering can be conducted in the presence of a sputtering gas, such as an inert gas, that advantageously can be maintained under very low pressure. In one or more embodiments, the inert gas can comprise a noble gas, such as argon, neon, xenon, and krypton. In particular, it can comprise argon. Advantageously, argon can be supplied at a partial pressure of 1.0×10⁻⁵ to 3.0×10⁻⁴ kPa, preferably 5×10⁻⁵ to 8×10⁻⁵ kPa.

Any suitable deposition growth rate can be used. In one or more embodiments, the deposition growth rate can be chosen to achieve a deposition rate of 0.1-5 nm, 0.1-4 nm, 0.1-3 nm, 0.1-1 nm, or 0.2-0.8 nm per minute.

In some embodiments, the pillar core can be cleaned prior to the depositing step. Thus, in one or more embodiments, cleaning the coated pillar before disposing the coated pillar between the first and second substantially parallel glass panes is included in the method. For example, the cleaning can involve using acetone or methanol in an ultrasonic bath. In one or more embodiments, the pillar core is polished, for example by tumbling the pillar core with a polishing compound (e.g., aluminum oxide, diamond, cerium oxide) or by thermal polishing.

In one or more embodiments, the pillar core comprises a metal or a metal alloy. The metal or metal alloy can include, but is not limited to, iron, tungsten, nickel, chromium, titanium, molybdenum, carbon steel, chromium steel, nickel steel, stainless steel, nickel-chromium steel, manganese steel, chromium-manganese steel, chromium-molybdenum steel, silicon steel, nichrome, duralumin or the like, or a ceramic material such as corundum, alumina, mullite, magnesia, yttria, aluminum nitride, silicon nitride, zirconia, silicon carbide, or the like. In one or more embodiments, the open structure can be made from a metal alloy that is an austenitic nickel-chromium-based superalloy. Other suitable metal or metal alloys include low carbon austenitic chromium-nickel stainless steels including SS 301, SS 304, SS 308, and SS 316, and high-carbon martensitic steels including 440C. Tool steels may also be used for the manufacture of pillars, which include, but are not limited to, unalloyed tool steels with small amounts of tungsten, for example C45W, C70W and C85W, low alloy cold work tool steels like 100Cr6 and alloy cold work tool steels like X 210 Cr 12, X 155 CrVMo 12 1, and X 36 CrMo 17.

The compressive yield strength of the pillar core can be greater than 400 MPa, greater than 600 MPa, greater than 800 MPa, greater than 1 GPA, or greater than 2 GPa at 20° C. In some embodiments, the compressive yield strength is 400 MPa-110 GPa, 400 MPa-50 GPa, 400 MPa-25 GPa, 400 MPa-12 GPa, 1-110 GPa, 1-50 GPa, 1-25 GPa, or 1-12 GPa at 20° C. In a particular embodiment, the pillar core is made of a metal or a metal alloy having a compressive yield strength greater than 1 GPa at 20° C.

The pillar core can have a thermal conductivity of less than 40 W m² °K⁻¹, less than 20 W m² °K⁻¹, less than 10 W m² °K⁻¹, or less than 5 W m² °K⁻¹. In one or more embodiments, the pillar core has a thermal conductivity of at least 0.1 W m² °K⁻¹.

The pillar core can be manufactured using any suitable method. In one or more embodiments, the pillar core is prepared by additive manufacturing, wherein a laser or other high energy source is directed at a metal powder bed to fuse particles of the metal powder. The fusion of particles may include the melting of particles by selective laser melting, (SLM), or sintering of particles by selective laser sintering (SLS) or micro laser sintering (MLS). In a preferred embodiment, the process for the fusion of particles of a metal powder is conducted repeatedly to form consecutive layers of the metal powder. For example, during manufacturing, a thin layer of metal powder can be applied to a build platform. The powder can be selectively fused by a laser process that is precise to each cross section. The building platform can be subsequently lowered, and the procedure of powder coating, fusing, and platform lowering can be repeated to form the material in a layer by layer manner, until the pillar core is completed.

In one or more embodiments, the pillar core can be fabricated using a suitable molding process. The shape of the pillar core is determined by the mold cavity, which can have the inverse shape corresponding to the dimensions of the desired shape of the pillar core.

In one or more embodiments, the pillar core can be prepared by cutting or carving material away from a solid metal substrate, for example by laser cutting or electric discharge machining (EDM) to obtain the desired shape of the pillar core. In one or more embodiments, the pillar core can be prepared by stamping out each pillar core from a sheet of material.

In one or more embodiments, the pillar core can be formed by an electrodeposition process, for example an electroforming process. Electroforming is the metal forming process where metal is grown by electrodeposition onto a substrate. An electrolytic bath is used to deposit the metal onto a conductive patterned surface, e.g., formed by means of a non-conductive mask applied to a conductive surface.

The coating material can include metal or semi-metals such as indium, silicon, germanium, silver, tin, lead, bismuth, antimony, strontium, and combinations thereof. In some embodiments, the coating material can include aluminum, chromium, copper, tungsten, molybdenum, or a combination thereof. In certain embodiments, the coating material can include a chalcogen that is sulfur, selenium, tellurium, or a combination thereof. In one or more embodiments, the coating material comprises tungsten disulfide, molybdenum disulfide, niobium disulfide, tantalum disulfide, molybdenum diselenide, tungsten diselenide, niobium diselenide, tantalum diselenide, or a combination thereof. In a particular embodiment, the coating material is tungsten disulfide.

The coating material can be derived from the appropriate precursor material. For example, a tungsten disulfide coating layer provided by DC sputtering can be derived from a tungsten source and a sulfur source, for instance a tungsten sputtering target and sulfur powder. In some embodiments, a component of the coating layer can be provided using a reactive gas, for example the sulfur source for DC sputtering can be hydrogen sulfide.

In one or more embodiments, the deposited coating material can include, but is not limited to, one or multiple monolayers of the coating material. The deposited coating material therefore can comprise a monolayer, two layers, three layers, four, five layer, six layers, seven layers or a low number of multiple layers of the deposited coating material. The thickness of each layer can be varied based on the overall design of the coating.

The method of manufacturing the VIG unit further includes annealing the deposited coating material to form a coating layer on the pillar core, thereby providing a coated pillar. This post-coating annealing step increases the lubricity and reduces the coefficient of friction of the coating layer, as described herein. The annealing can be performed in the same compartment as the deposition chamber, or alternatively can be performed in a separate compartment. Any suitable method and corresponding compartment design can be used for annealing, for example a vacuum annealing furnace.

The annealing can be performed using suitable conditions such as temperature, time, and pressure. In one or more embodiments, the annealing is performed at a temperature of 200-600°C for 8-24 hours. In one or more embodiments, the pressure applied by the dynamic vacuum is 1 × 10⁻⁵ to 1 × 10⁻⁸ kPa. In some embodiments, the annealing temperature is 250-600°C, 250-550°C, 250-500°C, 250-450°C, 250-400°C, 300-600°C, 300-550°C, 300-500°C, 300-450°C, 300-400°C, 350-600°C, 350-550°C, 350-500°C, 350-450°C, 350-400°C, 400-600°C, 400-550°C, 400-500°C, 400-450°C, 450-600°C, 450-550°C, 450-500°C, 500-600°C, 500-550°C, or 550-600°C for an annealing time of 8-24 hours (hrs), 8-20 hrs, 8-16 hrs, 8-12 hrs, 10-24 hrs, 10-20 hrs, 10-18 hrs, 10-16 hrs, 10-12 hrs, 12-24 hrs, 12-22 hrs, 12-20 hrs, 12-18 hrs, 12-16 hrs, 12-14 hrs, 14-24 hrs, 14-22 hrs, 14-20 hrs, 14-18 hrs, 14-16 hrs, 16-24 hrs, 16-22 hrs, 16-20 hrs, 16-18 hrs, 18-24 hrs, 18-22 hrs, 18-20 hrs, 20-24 hrs, or 22-24 hrs.

The annealing is performed at a reduced pressure and in an inert atmosphere, for example under a dynamic or static vacuum, in an inert atmosphere, for example under a static charge of an inert gas or a continuous flow of an inert gas, or under a combination of reduced pressure atmosphere and an inert atmosphere. Suitable inert atmospheres include nitrogen, argon, and neon gases that have less than 10 ppm, less than 1 ppm, less than 0.1 ppm, or less than 0.01 ppm of oxygen. In some embodiments, the annealing is performed under a static or dynamic vacuum at a pressure of 1 × 10⁻³ to 1 × 10⁻⁸ kPa, 1 × 10⁻⁴ to 1 × 10⁻⁸ kPa, 1 × 10⁻⁵ to 1 × 10⁻⁸ kPa, 5 × 10⁻⁵ to 1 × 10⁻⁸ kPa, 1 × 10⁻⁶ to 1 × 10⁻⁸ kPa, 5 × 10⁻⁶ to 1 × 10⁻⁸ kPa, 1 × 10⁻⁷ to 1 × 10⁻⁸ kPa, or 5 × 10⁻⁷ to 1 × 10⁻⁸ kPa. In one or more embodiments, the annealing is performed in an inert atmosphere under a pressure of 10 to 500 kPa, or 50 to 300 kPa, or 100 to 250 kPa, or 50 to 200 kPa.

The coated pillar can be completely covered by the coating layer. In one or more embodiments, substantially all of the coated pillar includes the coating layer. The thickness of the coating layer can also vary over the coated pillar, with certain portions having a thick coating and other portions having a thinner coating. In one or more embodiments, the coated pillar has a first substantially planar surface that is configured to be adjacent to or to contact an inner surface of the first glass pane. The coated pillar can also have a second substantially planar surface that is configured to be adjacent to or to contact an inner surface of the second glass pane. In one or more embodiments, at least one of the first substantially planar surface and the second substantially planar surface of the coated pillar comprises the coating layer. In one or more embodiments, the first substantially planar surface and the second substantially planar surface of the coated pillar each comprise the coating layer.

The method of manufacturing the VIG unit further includes disposing at least one of the coated pillar between first and second substantially parallel glass panes. In some embodiments, the method includes disposing a plurality of coated pillars between the first and second glass panes. The coated pillars can be cleaned prior to being disposed between the first and second glass panes. For example, the cleaning can involve using acetone, methanol, or ethanol in an ultrasonic bath. In some embodiments, the method includes disposing a plurality of coated pillars between the first and second glass panes. In particular embodiments, the method of disposing the coated pillars includes disposing the coated pillars on the first or second glass pane and then placing the other of the first or second glass panes on the opposite side of the coated pillars to provide coated pillars that are sandwiched between the first and second glass panes, wherein each coated pillar contacts the first or second glass pane on opposite sides of the coated pillar. The coated pillars can be arranged in any formation and is not particularly limited. In one or more embodiments, the coated pillars can be disposed on the first or second glass pane with an inter-pillar spacing that is the same or different, and can be 15-120 mm, 25-80 mm, 15-50 mm, 30 -60 mm, or 30-45 mm, as measured from either the outer edges or center points of adjacent pillars.

Any suitable glass can be used for the glass panes, for example a soda lime silica glass or an alkali aluminosilicate glass. The glass panes can have the same or different thickness, and the thickness can be 1-6 mm, 2-4 mm, or 2.5-3.5 mm. The glass panes are substantially transparent to visible light (i.e. at least about 50% transparent, more preferably at least about 70% transparent, more preferably at least about 80% transparent, and most preferably at least about 90% transparent), although they may be tinted in some embodiments.

The glass panes can be annealed and/or tempered to increase strength. The term "tempered glass pane" as used herein is understood to mean a glass pane in which compressive stresses have been introduced into the surface(s) of the glass pane. For glass to be considered strengthened this compressive stress on the surface(s) of the glass can be a minimum of 69 MPa (10,000 psi) and may be higher than 100 MPa.

The glass panes can be annealed, for example annealed at a temperature of at least 375°C. Tempered glass, also known as toughened glass, may be produced from annealed glass by means of a strengthening procedure, which e.g. may be thermal tempering, chemical tempering, or plasma tempering with the purpose of introducing the compressive stresses into the surface(s) of the glass pane. After tempering, the stress developed by the glass can be high, and the mechanical strength of tempered glass can be four to five times greater than that of annealed glass.

Thermally tempered glass may be produced by means of a furnace in which an annealed glass pane is heated to a temperature of approximately 600-700°C, after which the glass pane is rapidly cooled. The cooling introduces the compressive stresses into the glass pane surface(s).

A chemical tempering process involves chemical ion exchange of at least some of the sodium ions in the glass pane surface with potassium ions by immersion of the glass pane into a bath of liquid potassium salt, such as potassium nitrate. The potassium ions are about 30% larger in size than the replaced sodium ions, which cause the material at the glass pane surfaces to be in a compressed state. In this process, typically by immersion of the glass sheet into a molten salt bath for a predetermined period of time, ions at or near the surface of the glass sheet are exchanged for larger metal ions from the salt bath. The temperature of the molten salt bath is typically about 400-500°C and the predetermined time period can range from about two to ten hours. The incorporation of the larger ions into the glass strengthens the sheet by creating a compressive stress in a near surface region. A corresponding tensile stress is induced within a central region of the glass to balance the compressive stress.

Plasma tempering of glass panes resembles the chemical tempering process in that sodium ions in the surface layers of the glass pane are replaced with other alkali metal ions so as to induce surface compressive stresses in the glass pane, the replacement is however made by means of plasma containing the replacement ions. Such method may be conducted by using a plasma source and first and second electrodes disposed on opposing major surfaces of a glass pane, wherein the plasma comprises replacement ions, such as potassium, lithium, or magnesium ions, whereby the replacement ions are driven into the opposing surfaces of the glass pane so as to increase the strength of the pane. Methods of plasma tempering are disclosed e.g. in US 2013/0059087 A1 and in US 2013/0059160 A1.

The method of manufacturing the VIG unit further includes disposing a peripheral seal material around a periphery of the first and the second glass panes to form a pre-sealed VIG unit. Subsequently, the pre-sealed VIG unit is heated under reduced pressure to form the peripheral seal and a sealed cavity between the first and second glass panes.

The peripheral seal is a hermetic seal around the periphery of the glass panes and substantially eliminates any ingress or outgress of gas or air to/from the sealed cavity. Any suitable peripheral seal material can be used, including solder glass, indium, Ostalloy 313-4, 99% indium (In) wire available from Arconium (Providence, R.I.), liquid glass (i.e., glass composition with water in it when applied, wherein the water evaporates when heated to form the seal), rubber, silicone rubber, butyl rubber, Indalloy No. 53 available from Indium Corp. in paste form having a composition of 67% Bi and 33% In (% by weight), Indalloy No. 1 from Indium Corp. in paste form having a composition of 50% Sn, Indalloy No. 290 available from Indium Corp. in paste form having a composition of 97% In and 3% Ag, Indalloy No. 9 from Indium Corp. in paste form having a composition of 70% Sn, 18% Pb and 12% In, Indalloy No. 281 available from Indium Corp. in paste form having a composition of 58% Bi and 42% Sn, Indalloy No. 206 available from Indium Corp. in paste form having a composition of 60% Pb and 40% In, Indalloy No. 227 available from Indium Corp. in paste form having a composition of 77.2% Sn, 20% In, and 2.8% Ag, Indalloy No. 2 available from Indium Corp. in paste form having a composition of 80% In, 15% Pb and 5% Ag, Indalloy No. 3 available from Indium Corp. in paste form having a composition of 90% In and 10% Ag, or any other suitable material. The peripheral seal material can be a soldering material, for example a glass solder frit with a low melting temperature, wherein thermal treatment can be used to hermetically seal the periphery of the VIG unit. For example, the side seal material may comprise a glass solder frit paste with a low melting temperature, where the paste further comprises of about 70 wt% of an organic binder, inorganic fillers, and solvents, for example water or alcohol. In one or more embodiments, the frit material includes vanadium oxide, barium oxide, zinc oxide, bismuth oxide, aluminum oxide, silicon oxide, magnesium oxide, chromium oxide, iron oxide, cobalt oxide, sodium oxide, manganese oxide, tantalum oxide, molybdenum oxide, niobium oxide, tellurium oxide, or a combination thereof. The soldering material may be provided as a combination of two different materials comprising glass solder frit with different thermal expansion coefficients that are adjusted to correspond to the thermal expansion coefficients of the bonded parts. Also several solder materials may allow pre-sintering of a first solder to the glass surface and subsequently use of a second solder to join to the first solder. Examples of seals are shown in WO 02/27135 and EP 1 422 204. Alternatively, other materials may be employed, such as a metal band seal as disclosed e.g. in US 2015/218877. The peripheral seal material can be provided as a slurry or paste that is disposed around the periphery and sandwiched between the peripheral portions of the first and second glass panes, wherein the peripheral seal material is subsequently heated under vacuum to form the hermetic peripheral seal.

The VIG unit can also include an evacuation port on an outer surface of one of the glass panes. Alternatively, an evacuation port of a suitable kind may be provided in the peripheral seal between the two glass panes. The sealed cavity can be evacuated through the evacuation port, wherein the evacuation port is sealed after evacuation of the sealed cavity. In some embodiments, the VIG unit is heated to a temperature of at least 250° C, preferably to at least 300° C, prior to sealing the evacuation port.

Low gaseous thermal conduction may be achieved when, for example, the pressure in the sealed cavity is reduced to a level equal to or below about 10⁻⁵ bar, more preferably below 10⁻⁶ bar, and most preferably below 10⁻⁷ bar of atmospheric pressure.

The deposited coating material can have an average particle size of 0.03-0.2 µm, as determined from scanning electron microscopy (SEM) images. In some embodiments, the deposited coating material has an average particle size of 0.03-0.15 µm, 0.04-0.12 µm, 0.05-0.1 µm, 0.05-0.09 µm, or 0.05-0.08 µm.

The coating layer can have an average particle size of 0.1-0.5 µm, as determined as determined from scanning electron microscopy (SEM) images. In some embodiments, the coating layer has an average particle size of 0.1-0.4 µm, 0.1-0.3 µm, 0.15-0.4 µm, 0.15-0.3 µm, 0.2-0.4 µm, or 0.2-0.3 µm.

The particle size of the coating layer can be greater than the particle size of the deposited coating material. In other words, the coating layer that is formed after annealing has an average particle size that is greater than the average particle size of the deposited coating material. Without being bound by theory, the annealing of the deposited coating material leads to the formation of very fine platelets that provide improved lubricity, as evidenced by a decrease in the coefficient of friction between the deposited coating material and the coating layer after annealing.

The coating layer can be disposed on at least one of the contact surfaces of the coated pillar, preferably on both of the contact surfaces of the coated pillar. As used herein, "contact surface" is a surface of the coated pillar that is in contact with the inner surface of either the first or the second glass pane. In some embodiments, other portions of the pillar core besides the contact surface can be coated. The contact surfaces incorporate the coating layer in order to prevent or reduce the shear forces between these contact surfaces and the inner surfaces of the first and second glass panes of the VIG unit. The shear forces may arise from temperature related deformations of the glass panes or from wind loads or physical impacts on the exterior sides of the glass panes. The coating can serve to promote a physical displacement between the contact surfaces of the coated pillars and the inner surfaces of the first and second glass panes, thus reducing the amount of frequency of glass pane breakage or other damage to the VIG unit.

The coating layer can reduce the friction between the inner surface of a glass pane and the coated pillar. In some embodiments, the coating layer reduces the friction between the glass pane and the pillar by at least 20%, or 25-97%, or 50-80%.

The dynamic and static coefficients of friction were determined at a fixed normal loading by measuring the shear force (i.e., the force experience by the coated pillar in a direction that is perpendicular to the normal loading) versus the displacement (i.e., sliding distance) of the coated pillar.

The coating layer can have a dynamic coefficient of friction of 0.07-0.15 under a normal loading force of 4 to 36 kg, or 8 to 32 kg, or 8 to 24 kg, or 12 to 28 kg, or 8 to 20 kg, or 16 to 28 kg, or 16 to 24 kg. In some embodiments, the coating layer has a dynamic coefficient of friction that is 0.08-0.15, 0.08-0.14, 0.08-0.13, 0.08-0.12, 0.08-0.11, 0.09-0.15, 0.09-0.14, 0.09-0.13, 0.09-0.12, 0.1-0.15, 0.1-0.14, 0.1-0.13, 0.1-0.12, 0.11-0.15, 0.11-0.14, 0.11-0.13, or 0.12-0.15.

The coating layer can have a static coefficient of friction of 0.02-0.12 under a normal loading force of 4 to 36 kg, or 8 to 32 kg, or 8 to 24 kg, or 12 to 28 kg, or 8 to 20 kg, or 16 to 28 kg, or 16 to 24 kg. In some embodiments, the coating layer has a static coefficient of friction that is 0.03-0.12, 0.03-0.1 1, 0.03-0.1, 0.03-0.09, 0.03-0.08, 0.03-0.07, 0.03-0.06, 0.03-0.05, 0.04-0.12, 0.04-0.11, 0.04-0.1, 0.04-0.09, 0.04-0.08, 0.04-0.07, 0.04-0.06, 0.05-0.12, 0.05-0.11, 0.05-0.1, 0.05-0.09, 0.05-0.08, 0.05-0.07, 0.06-0.12, 0.06-0.11, 0.06-0.1, 0.06-0.09, 0.06-0.08, 0.07-0.12, 0.07-0.11, 0.07-0.1, 0.07-0.09, 0.08-0.12, 0.08-0.11, 0.08-0.1, 0.09-0.12, 0.09-0.11, or 0.1-0.12 under a force of 16 kg.

The annealing step can reduce the coefficient of friction. In one or more embodiments, the coefficient of friction of the deposited coating material is greater than the coefficient of friction of the coating layer. In one or more embodiments, the coefficient of friction of the coating layer is 5%, 10%, 15%, 20%, 25%, 30%, 35%, 40%, 45%, or 50% lower than the coefficient of friction of the deposited coating material.

Also provided herein is a VIG unit prepared according to the method disclosed herein. The VIG unit includes first and second substantially parallel glass panes; a peripheral seal attached around a periphery of the first and the second glass panes, thereby forming a sealed cavity between the first and the second glass panes; and at least one coated pillar disposed in the sealed cavity between the first and the second glass panes, wherein the coated pillar is derived from a coating material deposited on at least a portion of a pillar core under conditions effective to provide a deposited coating material, wherein the deposited coating material is annealed at a reduced pressure to form a coating layer on the at least a portion of the pillar core, thereby providing the coated pillar.

The coated pillar can have any suitable shape and is not particularly limited. In one or more embodiments, the coated pillar has a first substantially planar surface that is in contact with an inner surface of the first glass pane. The coated pillar can also have a second substantially planar surface that is in contact with an inner surface of the second glass pane. In one or more embodiments, at least one of the first substantially planar surface and the second substantially planar surface of the coated pillar comprises the coating layer. In one or more embodiments, the first substantially planar surface and the second substantially planar surface of the coated pillar each comprise the coating layer.

Various articles may be prepared to include the VIG unit described herein. In one or more embodiments, a window includes the VIG unit. The window may further include a frame. The window can be used for residential or commercial purposes. The articles including the VIG unit can also be used for particular applications. For example, one or more embodiments provides the use of the VIG unit for a window. One or more embodiments provides use of the window for a fixed or ventilating window of a commercial or residential building. One or more embodiments provides use of the window for a roof or skylight window, for example a fixed or ventilating window for a roof or skylight. Still one or more embodiments provides use of the window for a vertical window application, such as for use on the side of a commercial or residential building. The VIG unit described herein can also be used for other applications that use a window or transparent screen, for example a viewport, console screen, time piece, vehicle, or the like.

This disclosure is further illustrated by the following examples, which are nonlimiting.

### EXAMPLES

### Example 1

A vacuum insulated glazing unit including coated pillars was prepared.

First and second glass panes (soda lime silica, 4 mm) were prepared by annealing and tempering. The vacuum insulated glazing unit was then assembled and included a first glass pane and a second glass pane arranged in parallel and having a plurality of coated pillars (0.5 mm × 0.2 mm; 304 stainless steel with a tungsten disulfide coating) arranged between of the inner surface of the first glass pane and the inner surface of the second glass pane. An edge seal material (vanadium oxide frit, solvent, binder) was attached around a periphery of the glass panes to form a cavity. A vacuum was applied to the cavity via an evacuation hole in the first glass pane and the unit was heated to dry the edge seal material. The cavity was then sealed under vacuum.

Table 1 shows the processing parameters for the coated pillars and the corresponding VIG units. The pillars were coated with tungsten disulfide using a DC sputtering method. Examples 1 and 2 were not annealed after coating with tungsten disulfide. Examples 3 and 4 were annealed after coating with tungsten disulfide. Examples 1-4 were also subjected to production process annealing.

**Table 1.**

| Example | Coating Method | Annealing Temperature^{†} (°C) | Annealing Time^{†} (h) | Production Process Annealing^{‡} |
|---|---|---|---|---|
| 1 | DC sputtering | None | - | Yes |
| 2 | DC sputtering | None | - | Yes |
| 3 | DC sputtering | 400 | 16 | Yes |
| 4 | DC sputtering | 400 | 16 | Yes |

| | | | | |
|---|---|---|---|---|
| ^{†}Annealing of the coating material under vacuum prior to assembly of the VIG unit. ^{‡}Production process annealing of the assembled VIG unit at 400°C. | | | | |

Table 2 shows the static coefficient of friction (COF), dynamic COF, and glass damage for Examples 1-4 under either a 16 kg or 32 kg in-plane force.

**Table 2.**

| Example | Static COF (16kg) | Dynamic COF (16 kg) | Glass Damage* (16 kg) | Static COF (32 kg) | Dynamic COF (32 kg) | Glass Damage** (32 kg) |
|---|---|---|---|---|---|---|
| 1 | 0.15 | 0.14 | 38% | - | | |
| 2 | | | | 0.18 | 0.16 | 63% |
| 3 | 0.16 | 0.12 | 8% | | | |
| 4 | | | | 0.12 | 0.05 | 58% |

| | | | | | | |
|---|---|---|---|---|---|---|
| *Percentage of glass panes showing visible damage after an applied in-plane force of 16 kg. **Percentage of glass panes showing visible damage after an applied in-plane force of 32 kg. | | | | | | |

The static and dynamic coefficient of frictions (COF) were determined at a fixed normal load (16 kg or 32 kg) by measuring the shear force (i.e., the force on the coated pillar in a direction that is perpendicular to the normal loading) versus the displacement (i.e., sliding distance) of the coated pillar. The results show that the post coating annealing treatment reduces the amount of visible glass damage.

A series of VIG units were assembled and subjected to an accelerated aging test. Examples 5-9 were assembled using the coated pillars of Example 1. Examples 10-13 were assembled using the coated pillars of Example 3. The accelerated aging test was performed by subjecting the VIG units to 100 push-pull cycles at 3.6 kPa with a hold time of 7 seconds and a ramp rate of 3 seconds.

Table 3 shows the number of cone cracks present before and after the accelerated aging test.

**Table 3.**

| Example | Annealing temperature (°C) | Annealing time (h) | Glass damage before test* (%) | Glass damage after test** (%) |
|---|---|---|---|---|
| 5 | - | - | 0 | 63 |
| 6 | - | - | 1 | 60 |
| 7 | - | - | 1 | 61 |
| 8 | - | - | 1 | 63 |
| 9 | 400 | 16 | 0 | 51 |
| 10 | 400 | 16 | 0 | 40 |
| 11 | 400 | 16 | 0 | 37 |
| 12 | 400 | 16 | 0 | 42 |

| | | | | |
|---|---|---|---|---|
| *Percentage of pillars in VIG unit that showed glass damage before test. **Percentage of pillars in VIG unit that showed glass damage after test. | | | | |

The results show that fewer cone cracks were present in the VIG units that included pillars having a tungsten disulfide coating that was subjected to a post coating anneal treatment.

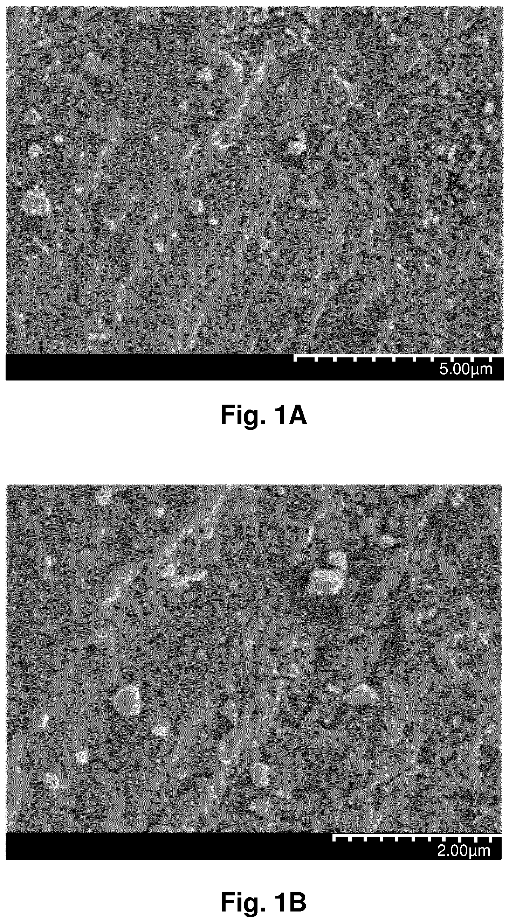

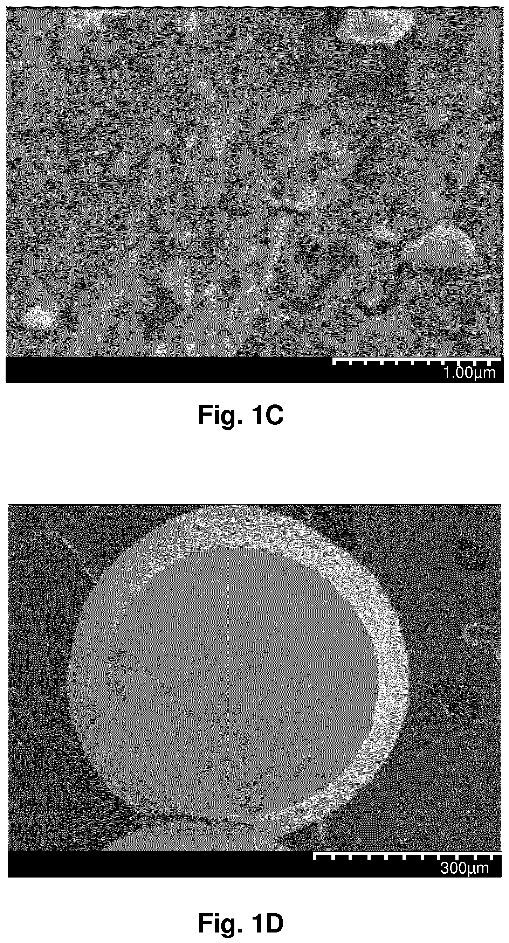

FIG. 1 shows a series of SEM images of Example 4, where the coated pillar is annealed and the corresponding VIG unit is subjected to production process annealing.

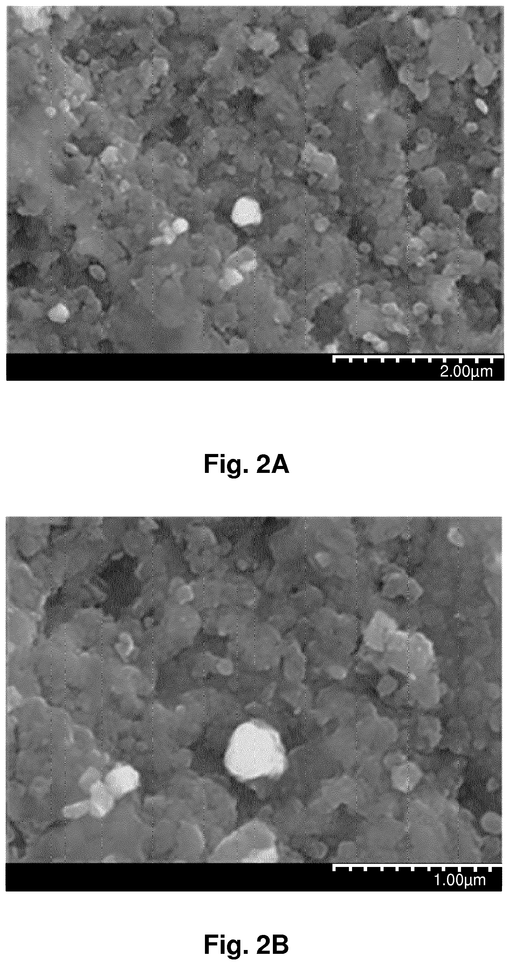

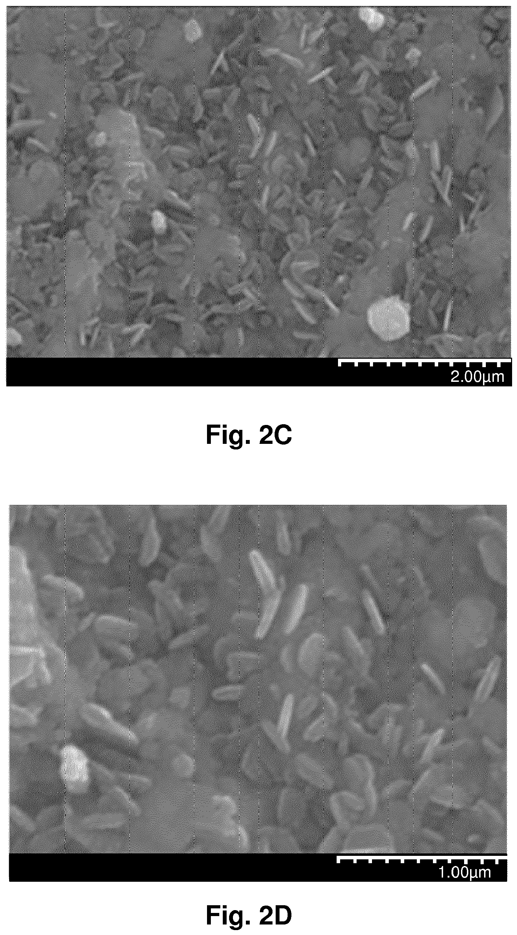

FIG. 2 shows a series of SEM images of a pillar from Example 4, including deposited coating material (top) and a coated pillar including the annealed coating layer (bottom). The images suggest that vacuum annealing of the deposited coating material on the pillar induces crystallization.

While particular embodiments have been described, alternatives, modifications, variations, improvements, and substantial equivalents that are or may be presently unforeseen may arise to applicants or others skilled in the art. The scope of the invention is defined by the appended claims.

## Claims

1. A method of manufacturing a vacuum insulated glazing (VIG) unit, the method comprising:
depositing a coating material on at least a portion of a pillar core under conditions effective to provide a deposited coating material;
annealing the deposited coating material at a reduced pressure and in an inert atmosphere to form a coating layer on the pillar core, thereby providing a coated pillar;
disposing at least one of the coated pillar between first and second substantially parallel glass panes;
disposing a peripheral seal material around a periphery of the first and the second glass panes to form a pre-sealed VIG unit; and
heating the pre-sealed VIG unit under reduced pressure to form the peripheral seal and a sealed cavity between the first and second glass panes.

2. The method of claim 1, wherein the depositing comprises sputter deposition, cathodic arc deposition, evaporative deposition, pulsed laser deposition, pulsed electron deposition, electron beam physical vapor deposition, DC sputtering, or a combination thereof.

3. The method of any preceding claim, wherein a surface of the pillar core is at a temperature of 200-600°C during the depositing of the coating material, and/or the annealing is at a temperature of 200-600°C for 8-24 hours.

4. The method of any preceding claim, wherein the reduced pressure is 1 × 10⁻³ to 1 × 10⁻⁸ kPa.

5. The method of any preceding claim, further comprising cleaning the coated pillar before disposing the coated pillar between the first and second substantially parallel glass panes.

6. The method of any preceding claim, wherein the pillar core comprises a metal or a metal alloy, and/or
wherein the coating material comprises tungsten disulfide, molybdenum disulfide, niobium disulfide, tantalum disulfide, molybdenum diselenide, tungsten diselenide, niobium diselenide, tantalum diselenide, or a combination thereof.

7. The method of any preceding claim, wherein:
• the deposited coating material has an average particle size of 0.03-0.2 µm, and/or
• the coating layer has an average particle size of 0.1-0.5 µm, and/or
• the average particle size of the coating layer is greater than the particle size of the deposited coating material, and/or
• the coating layer has at least one of:
- a thickness of 0.2-0.5 µm;
- a dynamic coefficient of friction of 0.07-0.15 under a force of 4 to 36 kg; and
- a static coefficient of friction of 0.02-0.12 under a force of 4 to 36 kg.

8. A vacuum insulated glazing (VIG) unit, comprising:
first and second substantially parallel glass panes;
a peripheral seal attached around a periphery of the first and the second glass panes, thereby forming a sealed cavity between the first and the second glass panes; and
at least one coated pillar disposed in the sealed cavity between the first and the second glass panes,
wherein the coated pillar is derived from a coating material deposited on at least a portion of a pillar core under conditions effective to provide a deposited coating material, wherein the deposited coating material is annealed at a reduced pressure and in an inert atmosphere to form a coating layer on the at least a portion of the pillar core, thereby providing the coated pillar.

9. The VIG unit of claim 8, wherein a surface of the pillar core is at a temperature of 200-600°C when the coating material is deposited, and/or the deposited coating material is annealed at a temperature of 200-600°C for 8-24 hours.

10. The VIG unit of any of the claims 8-9, wherein the reduced pressure is 1 × 10⁻³ to 1 × 10⁻⁸ kPa.

11. The VIG unit of any of the claims 8-10, wherein the pillar core comprises a metal or a metal alloy, and/or
wherein the coating material comprises tungsten disulfide, molybdenum disulfide, niobium disulfide, tantalum disulfide, molybdenum diselenide, tungsten diselenide, niobium diselenide, tantalum diselenide, or a combination thereof.

12. The VIG unit of any of the claims 8-11, wherein:
• the deposited coating material has an average particle size of 0.03-0.2 µm, and/or
• the coating layer has an average particle size of 0.1-0.3 µm, and/or
• the particle size of the coating layer is greater than the particle size of the deposited coating material, and/or
• the coating layer has at least one of:
- a thickness of 0.2-0.5 µm;
- a dynamic coefficient of friction of 0.07-0.15 under a force of 4 to 36 kg; and
- a static coefficient of friction of 0.02-0.12 under a force of 4 to 36 kg.

13. The VIG unit of any of the claims 8-12, wherein the coated pillar further comprises
a first substantially planar surface adjacent an inner surface of the first glass pane; and
a second substantially planar surface adjacent an inner surface of the second glass pane,
wherein the first substantially planar surface and the second substantially planar surface of the coated pillar comprise the coating layer.

14. The VIG unit of any of the claims 8-13, wherein at least one of the first and the second glass panes is a tempered glass pane.

15. The VIG unit of any of the claims 8-14, wherein the peripheral seal comprises a solder material, and the first and the second glass panes are in gastight contact with the peripheral seal.

## Patentansprüche

1. Verfahren zur Herstellung einer vakuumisolierten Verglasungs (VIG) -Einheit, welches Verfahren Folgendes umfasst:
Abscheiden eines Beschichtungsmaterials auf mindestens einem Abschnitt eines Säulenkerns unter Bedingungen, die wirksam sind, um ein abgelagertes Beschichtungsmaterial bereitzustellen;
Glühen des abgelagerten Beschichtungsmaterials bei einem reduzierten Druck und in einer inerten Atmosphäre, um eine Beschichtungsschicht auf dem Säulenkern zu bilden, wodurch eine beschichtete Säule bereitgestellt wird;
Anordnen mindestens einer der beschichteten Säulen zwischen ersten und zweiten im Wesentlichen parallelen Glasscheiben;
Anordnen eines Umfangsdichtungsmaterials um einen Umfang der ersten und der zweiten Glasscheibe herum, um eine vorabgedichtete VIG-Einheit zu bilden; und
Erwärmen der vorabgedichteten VIG-Einheit unter reduziertem Druck, um die Umfangsdichtung und einen abgedichteten Hohlraum zwischen der ersten und zweiten Glasscheibe zu bilden.

2. Verfahren nach Anspruch 1, wobei die Abscheidung die Sputterabscheidung, die kathodische Bogenabscheidung, die Verdampfungsabscheidung, die gepulste Laserabscheidung, die gepulste Elektronenabscheidung, die physikalische Dampfabscheidung mit Elektronenstrahl, die Gleichstromsputterung oder eine Kombination davon umfasst.

3. Verfahren nach einem der vorhergehenden Ansprüche, wobei eine Oberfläche des Säulenkerns während des Abscheidens des Beschichtungsmaterials bei einer Temperatur von 200-600°C liegt und/oder das Glühen 8-24 Stunden lang bei einer Temperatur von 200-600°C erfolgt.

4. Verfahren nach einem der vorgehenden Ansprüche, wobei der reduzierte Druck 1 × 10⁻³ bis 1 × 10⁻⁸ kPa beträgt.

5. Verfahren nach einem der vorgehenden Ansprüche, weiter umfassend das Reinigen der beschichteten Säule vor dem Anordnen der beschichteten Säule zwischen der ersten und der zweiten im Wesentlichen parallelen Glasscheibe.

6. Verfahren nach einem der vorhergehenden Ansprüche, wobei der Säulenkern ein Metall oder eine Metalllegierung umfasst, und/oder wobei das Beschichtungsmaterial Wolframdisulfid, Molybdändisulfid, Niobdisulfid, Tantaldisulfid, Molybdändiselenid, Wolframdiselenid, Niobdiselenid, Tantaldiselenid oder eine Kombination davon umfasst.

7. Verfahren nach einem der vorgehenden Ansprüche, wobei:
• das abgeschiedene Beschichtungsmaterial eine durchschnittliche Partikelgröße von 0,03-0,2 µm aufweist, und/oder
• die Beschichtungsschicht eine durchschnittliche Partikelgröße von 0,1-0,5 µm aufweist, und/oder
• die durchschnittliche Partikelgröße der Beschichtungsschicht größer ist als die durchschnittliche Partikelgröße des Beschichtungsmaterials, und/oder
• die Beschichtungsschicht mindestens eines der folgenden aufweist:
- eine Dicke von 0,2-0,5 µm;
- einen dynamischen Reibungskoeffizienten von 0,07-0,15 bei einer Kraft von 4 bis 36 kg; und
- einen statischen Reibungskoeffizienten von 0,02-0,12 bei einer Kraft von 4 bis 36 kg.

8. Vakuumisolierte Verglasungs (VIG) -Einheit, umfassend:
erste und zweite im Wesentlichen parallele Glasscheiben;
eine Umfangsdichtung, die um einen Umfang der ersten und der zweiten Glasscheibe herum angebracht ist, wodurch ein abgedichteter Hohlraum zwischen der ersten und der zweiten Glasscheibe gebildet wird; und
mindestens eine beschichtete Säule, die in dem abgedichteteten Hohlraum zwischen der ersten und der zweiten Glasscheibe angeordnet ist,
wobei die beschichtete Säule von einem auf mindestens einem Abschnitt eines Säulenkerns unter Bedingungen, die wirksam sind, um ein abgelagertes Beschichtungsmaterial bereitzustellen, abgeschiedenen Beschichtungsmaterial abgeleitet ist, wobei das abgelagerte Beschichtungsmaterial bei einem reduzierten Druck und in einer inerten Atmosphäre geglüht wird, um eine Beschichtungsschicht auf mindestens einem Abschnitt des Säulenkerns zu bilden und dadurch die beschichtete Säule bereitzustellen.

9. VIG-Einheit nach Anspruch 8, wobei eine Oberfläche des Säulenkerns eine Temperatur von 200-600°C aufweist, wenn das Beschichtungsmaterial abgeschieden wird, und/oder das abgeschiedene Beschichtungsmaterial 8-24 Stunden lang bei einer Temperatur von 200-600°C geglüht wird.

10. VIG-Einheit nach einem der Ansprüche 8 bis 9, wobei der reduzierte Druck 1 × 10⁻³ bis 1 × 10⁻⁸ kPa beträgt.

11. VIG-Einheit nach einem der Ansprüche 8 bis 10, wobei der Säulenkern ein Metall oder eine Metalllegierung umfasst, und/oder
wobei das Beschichtungsmaterial Wolframdisulfid, Molybdändisulfid, Niobdisulfid, Tantaldisulfid, Molybdändiselenid, Wolframdiselenid, Niobdiselenid, Tantaldiselenid oder eine Kombination davon umfasst.

12. VIG-Einheit nach einem der Ansprüche 8 bis 11, wobei:
• das abgeschiedene Beschichtungsmaterial eine durchschnittliche Partikelgröße von 0,03-0,2 µm aufweist, und/oder
• die Beschichtungsschicht eine durchschnittliche Partikelgröße von 0,1-0,3 µm aufweist, und/oder
• die Partikelgröße der Beschichtungsschicht größer ist als die durchschnittliche Partikelgröße des Beschichtungsmaterials, und/oder
• die Beschichtungsschicht mindestens eines der folgenden aufweist:
- eine Dicke von 0,2-0,5 µm;
- einen dynamischen Reibungskoeffizienten von 0,07-0,15 bei einer Kraft von 4 bis 36 kg; und
- einen statischen Reibungskoeffizienten von 0,02-0,12 bei einer Kraft von 4 bis 36 kg.

13. VIG-Einheit nach einem der Ansprüche 8 bis 12, wobei die beschichtete Säule ferner umfasst
eine erste, im Wesentlichen ebene Oberfläche, die an eine Innenfläche der ersten Glasscheibe angrenzt; und
eine zweite, im Wesentlichen ebene Oberfläche, die an eine Innenfläche der zweiten Glasscheibe angrenzt,
wobei die erste im Wesentlichen ebene Oberfläche und die zweite im Wesentlichen ebene Oberfläche der beschichteten Säule die Beschichtungsschicht umfassen.

14. VIG-Einheit nach einem der Ansprüche 8 bis 13, wobei mindestens eine der ersten und zweiten Glasscheiben eine temperierte Glasscheibe ist.

15. VIG-Einheit nach einem der Ansprüche 8 bis 14, wobei die Umfangsdichtung ein Lötmaterial umfasst und die erste und die zweite Glasscheibe in gasdichtem Kontakt mit der Umfangsdichtung stehen.

## Revendications

1. Procédé de fabrication d'une unité de verre isolant sous vide (VIG), comprenant les étapes consistant à :
déposer un matériau de revêtement sur au moins une partie d'un noyau de pilier dans des conditions efficaces pour fournir un matériau de revêtement déposé ;
recuire le matériau de revêtement déposé à une pression réduite et dans une atmosphère inerte pour former une couche de revêtement sur le noyau de pilier, fournissant ainsi un pilier revêtu ;
disposer au moins un du pilier revêtu entre des première et deuxième vitres essentiellement parallèles ;
disposer un matériau d'étanchéité périphérique autour d'une périphérie des première et deuxième vitres pour former une unité VIG pré-scellée ; et
chauffer l'unité VIG pré-scellée sous pression réduite pour former le joint périphérique et une cavité étanche entre les première et deuxième vitres.

2. Procédé selon la revendication 1, dans lequel le dépôt comprend le dépôt par pulvérisation cathodique, le dépôt par arc cathodique, le dépôt par évaporation, le dépôt par laser pulsé, le dépôt par électrons pulsés, le dépôt physique en phase vapeur par faisceau d'électrons, la pulvérisation en courant continu, ou une combinaison de ceux-ci.

3. Procédé selon l'une quelconque des revendications précédentes, dans lequel une surface du noyau de pilier est à une température de 200 à 600°C pendant le dépôt du matériau de revêtement, et / ou le recuit est réalisé à une température de 200 à 600 °C pendant 8 à 24 heures.

4. Procédé selon l'une quelconque des revendications précédentes, dans lequel la pression réduite est de 1 × 10⁻³ à 1 × 10⁻⁸ kPa.

5. Procédé selon l'une quelconque des revendications précédentes, comprenant en outre le nettoyage du pilier revêtu avant la disposition du pilier revêtu entre les première et deuxième vitres essentiellement parallèles.

6. Procédé selon l'une quelconque des revendications précédentes, dans lequel le noyau de pilier comprend un métal ou un alliage métallique, et / ou dans lequel le matériau de revêtement comprend du disulfure de tungstène, du disulfure de molybdène, du disulfure de niobium, du disulfure de tantale, du diséléniure de molybdène, du diséléniure de tungstène, du diséléniure de niobium, du diséléniure de tantale, ou une combinaison de ceux-ci.

7. Procédé selon l'une quelconque revendication précédente, dans lequel :
• le matériau de revêtement déposé présente une granulométrie moyenne de 0,03 à 0,2 µm, et / ou
• la couche de revêtement présente une granulométrie moyenne de 0,1 à 0,5 µm, et / ou
• la granulométrie moyenne de la couche de revêtement est supérieure à la granulométrie du matériau de revêtement déposé, et / ou
• la couche de revêtement présente au moins l'un parmi :
- une épaisseur de 0,2 à 0,5 µm ;
- un coefficient dynamique de frottement de 0,07 à 0,15 sous une force de 4 à 36 kg ; et
- un coefficient statique de frottement de 0,02 à 0,12 sous une force de 4 à 36 kg.

8. Unité de vitrage isolé sous vide (VIG), comprenant :
des première et deuxième vitres essentiellement parallèles ;
un joint périphérique fixé autour d'une périphérie des première et deuxième vitres, formant ainsi une cavité scellée entre les première et deuxième vitres ; et
au moins un pilier revêtu disposé dans la cavité scellée entre les première et deuxième vitres,
dans laquelle le pilier revêtu est dérivé d'un matériau de revêtement déposé sur au moins une partie d'un noyau de pilier dans des conditions efficaces pour fournir un matériau de revêtement déposé, dans laquelle le matériau de revêtement déposé est recuit à une pression réduite et dans une atmosphère inerte pour former une couche de revêtement sur l'au moins une partie du noyau de pilier, fournissant ainsi le pilier revêtu.

9. Unité de VIG selon la revendication 8, dans laquelle une surface du noyau de pilier est à une température de 200 à 600°C pendant le dépôt du matériau de revêtement, et / ou le matériau de revêtement dépose est recuit à une température de 200 à 600 °C pendant 8 à 24 heures.

10. Unité de VIG selon l'une quelconque des revendications 8 à 9, dans laquelle la pression réduite est de 1 × 10⁻³ à 1 × 10⁻⁸ kPa.

11. Unité de VIG selon l'une quelconque des revendications 8 à 10, dans laquelle le noyau de pilier comprend un métal ou un alliage métallique, et / ou dans lequel le matériau de revêtement comprend du disulfure de tungstène, du disulfure de molybdène, du disulfure de niobium, du disulfure de tantale, du diséléniure de molybdène, du diséléniure de tungstène, du diséléniure de niobium, du diséléniure de tantale, ou une combinaison de ceux-ci.

12. Unité de VIG selon l'une quelconque des revendications 8 à 11, dans laquelle :
• le matériau de revêtement déposé présente une granulométrie moyenne de 0,03 à 0,2 µm, et / ou
• la couche de revêtement présente une granulométrie moyenne de 0,1 à 0,3 µm, et/ou
• la granulométrie de la couche de revêtement est supérieure à la granulométrie du matériau de revêtement déposé, et / ou
• la couche de revêtement présente au moins l'un parmi :
- une épaisseur de 0,2 à 0,5 µm;
- un coefficient dynamique de frottement de 0,07 à 0,15 sous une force de 4 à 36 kg ; et
- un coefficient statique de frottement de 0,02 à 0,12 sous une force de 4 à 36 kg.

13. Unité de VIG selon l'une quelconque des revendications 8 à 12, dans laquelle le pilier revêtu comprend en outre
une première surface essentiellement plane adjacente à une surface interne de la première vitre ; et
une deuxième surface essentiellement plane adjacente à une surface interne de la deuxième vitre,
dans laquelle la première surface essentiellement plane et la deuxième surface essentiellement plane du pilier revêtu comprennent la couche de revêtement.

14. Unité de VIG selon l'une quelconque des revendications 8 à 13, dans laquelle au moins l'une des première et deuxième vitres est une vitre trempée.

15. Unité de VIG selon l'une quelconque des revendications 8 à 14, dans laquelle le joint périphérique comprend un matériau de soudure, et les première et deuxième vitres sont en contact étanche aux gaz avec le joint périphérique.
